# EUROPEAN PATENT APPLICATION

(11) **EP 3 868 554 A1**
(43) Date of publication of application: **25.08.2021**
(21) Application number: 20158091.7
(22) Date of filing: 18.02.2020
(51) Int. Cl.: B32B 5/24, B32B 5/02, B32B 5/18, B32B 5/20, B32B 7/08, B32B 7/12, B32B 27/06, B32B 27/12, B32B 27/18, B32B 27/32, E04C 2/20, F16L 59/02

(54) **FIRE PROOF INSULATION BOARDS BASED ON EXPANDED POLYSTYRENE**

(71) Applicant: Sika Technology AG, 6340 Baar (CH)
(72) Inventor: Roskamp, Robert, 6460 Altdorf (CH); Kerber, Carine, 6060 Sarnen (CH); Schoenbrodt, Simon, 6060 Sarnen (CH); Kiser, Ernst, 6060 Sarnen (CH)
(74) Representative: Sika Patent Attorneys

(57) **Abstract**

The present invention relates to an expanded polystyrene board comprising expanded polystyrene and a scrim, wherein the scrim is attached to the expanded polystyrene and wherein the scrim is arranged on one surface of the expanded polystyrene or is embedded into the expanded polystyrene. The present invention further relates to a roof system, comprising an expanded polystyrene board according to the invention and a roofing membrane. The present invention further describes methods for producing an expanded polystyrene board and a roof system according to the invention or the use thereof for a construction of a roof which meets the requirements of BroofTl classification.

## Description

The present invention relates to an expanded polystyrene board comprising expanded polystyrene and a scrim and to a roof system comprising such an expanded polystyrene board. The present invention further relates to a method for producing such an expanded polystyrene board and to a method for producing such a roof system. Further, the invention is directed to the use of such an expanded polystyrene board and of such a roof system.

### State of the art

Nowadays, it is required that the construction elements of roof systems are sufficiently fire proof and various more or less fire proof construction elements have been developed.

E.g., US 3,493,460 describes a thin panel, comprising a mixture of expanded polystyrene beads, epoxy or phenolic resin, and chopped glass roving between two layers comprised of epoxy resin and glass cloth. The panel shows a degree of resistance to fire.

US 2018320370 A1 is directed toward composite high density polyisocyanurate cover boards that have improved fire resistance. The cover boards comprise a polyisocyanurate foam core and a glass mat. One or several interfacial coating layers are arranged between the polyisocyanurate foam core and the glass mat.

WO 2018204911 A1 describes foam construction boards that include particulate fire-resistant material sandwiched between the foam body and a glass mat of the construction board. The foam is a polyurethane or polyisocyanurate foam. The publication suggests employing a fire-resistant interfacial layer and a coating layer between the foam body and the glass mat.

BroofT1 is a fire proof class for products and materials used for roof coverings, such as roofing membranes and insulation boards. The classification for roofing membranes depends not only on the structure of the membrane but also on the application requirements, for example, whether the roofing membrane is used for providing an insulated roof system or a non-insulated roof system. Therefore, some roofing membranes are BroofT1 classified for use with polyisocyanurate (cover) boards but not for use with expanded polystyrene (insulation) boards.

In order to meet the requirements of the BroofT1 classification, a burning item, which is placed on an insulation board, must be prevented from breaking through the hole created by the melting of the insulation board.

Commercially available self-adhering roofing membranes are typically reinforced with a glass scrim in order to meet the requirements of the BroofT1 classification when used in combination with expanded polystyrene insulation boards. However, a stiff glass reinforcement in a roofing membrane leads to the occurrence of indentations on the membrane during fabrication, which is at least an optical flaw. Furthermore, the use of stiff glass reinforcements reduces the flexibility of the roofing membrane, which is a significant disadvantage especially in detailing applications.

In order to comply with the requirements of the BroofT1 classification, mechanically adhered roof systems typically comprise a glass mat sandwiched between an expanded polystyrene board and a roofing membrane. Such a glass mat is capable of supporting the weight of the burning item, but typically high weight glass mats, such as those having a weight per unit area of greater than 130 g/m² have to be used. This type of buildup based on the use of a glass mat between the expanded polystyrene board and the roofing membrane is not feasible for all roof systems, in particular not for fully adhered roof systems, in which the roofing membrane is adhered to the roof substrate via a layer of an adhesive. Further, installation of the glass mat on the expanded polystyrene board is an additional step, which is cumbersome and can irritate the skin of the worker's hands. The same applies for glass felts, which have been used instead of glass mats.

Given this state of the art, there is a need for roof construction elements, which comprise expanded polystyrene as the key material for thermal insulation, which fulfill the requirements for BroofT1 classification, and which can be used for providing fully adhered roof systems. Preferably, such roof construction elements should also allow for the construction of roofs, which avoids indentations on the roofing membrane as much as possible.

The present application addresses these needs.

### Description of the invention

Accordingly, it is one object of the invention to provide an expanded polystyrene board and a roof system comprising such board, which meet the BroofT1 classification requirements, i.e. prevents a burning item from breaking through a cavity left from molten expanded polystyrene. Preferably, insulating expanded polystyrene boards and insulated roof systems are provided.

It is one further object of the invention to provide roof construction products, which have a neat surface and do not show indentations on their surface. It is one further object of the invention to provide roof construction products, which allow a gain in installation speed and easiness.

At least one of these objects is solved by an expanded polystyrene board according to a first aspect of the invention, a roof system according to a second aspect of the invention, the method of a third aspect of the invention, the method of a fourth aspect of the invention, or the use according to a fifth aspect of the invention.

In the below, the terms "to comprise" and "to contain" and their conjugations comprise the term "consist of" and its conjugations. The term "a" or "one" includes the term "at least one".

In a first aspect, the invention relates to an expanded polystyrene board comprising expanded polystyrene and a scrim, wherein the scrim is attached to the expanded polystyrene, wherein i) the scrim is arranged (essentially) on one surface of the expanded polystyrene or ii) is embedded into the expanded polystyrene and wherein the scrim is composed of a non-flammable or hardly flammable material according to DIN 4102-1:1998.

A "non-flammable" material in this application is a material according to the construction material class A1 or A2, whereas a "hardly flammable" material is a material according to the construction material class B1 (both according to DIN 4102-1:1998). In that the material is non-flammable or hardly flammable, the scrim maintains its integrity upon exposure to fire even when part of the expanded polystyrene is burned and/or molten. The inventors have surprisingly found that a roof system comprising such an expanded polystyrene board fulfils the BroofT1 classification requirements.

The term "composed of" is intended to indicate that the scrim as a whole, when tested according to DIN 4102-1:1998, is classified as either of A1, A2 or B1. Constituents of the scrim (such as the binder, see below) may for themselves not fall into these classes.

A "scrim", as this term is used in the present invention is an ordered arrangement of at least two sets of parallel yarns (also designated as weft and warp yarns), which are arranged with an angle of from 60 to 120°, and preferably about 90±5°, towards each other thereby forming interstices, wherein the interstices occupy more than 60% of the entire surface of the scrim. In this connection the "entire surface of the scrim designates the surface formed by the scrim in the two space directions, where the scrim has the longest extension.

With regard to the scrim it is moreover preferred that the material of the scrim, which forms the yarns thereof, is a material according to the construction material class A1 or A2 (according to DIN 4102-1:1998). In addition, it is preferred that the material of the scrim, which forms the yarns thereof is sufficiently stiff to maintain its shape, even if one or more yarns therein are cut. Thus, the scrim provides reinforcement to the inventive expanded polystyrene board as well as to roof system prepared therewith.

Consequently, the reinforcing and fire retarding scrim, which is a component of the expanded polystyrene board, allows to dispense with a scrim in the roofing membrane which is subsequently applied onto the expanded polystyrene board in order to provide the roof system, so that increasing the stiffness of the roofing membrane is avoided. This provides the advantage that the roofing membrane can be easily applied and the esthetics is improved, since indentations on the roofing membrane can be avoided. Also, the application of glass mats or glass felts at the construction site is not necessary, so that installation speed and easiness are improved.

The term "expanded polystyrene board" describes a construction element, construction board, panel, and/or insulated board.

An expanded polystyrene board is a board, whose main component by volume and weight is expanded polystyrene. In specific embodiments, the expanded polystyrene and the scrim constitute at least 60, 70, 80, 90, or 95 wt.-% of the total weight of the expanded polystyrene board. Expanded polystyrene may be abbreviated as "EPS". In some embodiments, the expanded polystyrene board contains one or more of further plastics, fillers and flame retardants. The expanded polystyrene board may consist of the expanded polystyrene, the scrim, and optionally fillers. The fillers may have fire retarding properties.

According to the invention, the expanded polystyrene board comprises expanded polystyrene and a scrim. The expanded polystyrene itself preferably has the shape of a board or is a board. In other words, the expanded polystyrene forms a layer of expanded polystyrene. The scrim is attached to the expanded polystyrene and is arranged on one surface of the expanded polystyrene or is embedded into the expanded polystyrene to form the expanded polystyrene board of the invention. In one embodiment, the scrim is arranged (essentially) on one surface of the expanded polystyrene, wherein the expanded polystyrene preferably has the shape of a board. Preferably, the surface is one of the two major surfaces of the expanded polystyrene having the shape of a board. The two major surfaces are (essentially) parallel to each other and preferably (essentially) planar. In one embodiment, the term "arranged essentially on one surface of the expanded polystyrene" means that at least 95 or 98 % of the weight or volume of the expanded polystyrene is arranged on one side of the scrim. In an alternative embodiment, the scrim is arranged (essentially) in the middle of the expanded polystyrene or within the expanded polystyrene, which has the shape of a board.

As indicated above, the scrim is composed of a non-flammable or hardly flammable material, and thus provides a fire retarding and reinforcing layer for the expanded polystyrene board.

Conventionally, the scrim is made from continuous filament products (called yarns, threads or fibers), which form the yarns thereof. The fibers or yarns regularly extend across the whole length of width of the scrim.

Preferably, the yarns or fibers of the scrim are made of or comprise glass, polyester, aramid, polyethylene naphthalate, carbon (as carbon fibers), or mixtures thereof. Glass fibers are particularly preferred. In other words, the scrim is preferably a glass scrim. If the base material of the fibers is flammable according to a class other than A1, A2 and B1 (according to DIN 4102-1), it is regularly modified such that it falls within one of these classes.

In a preferred embodiment, the scrim is a non-woven product, i.e. the warp and weft yarns are preferably fixed on one another by chemical bonding. Such a scrim is also called a laid scrim. In other words, the scrim is preferably a laid scrim. A laid scrim is a scrim comprising yarns, which are chemically bonded together by one or more binders. Preferably, the warp and weft yarns of the scrim are in right-angled position (90±5°) to each other. A laid scrim generally looks like a grid or lattice. One advantage of such a scrim is that it is thinner than woven products. Since the laid scrim is thinner, less bonding material is required in order to attach the scrim to other construction elements. Therefore, attachment of the laid scrim to other construction elements as well as the expanded polystyrene board is improved and easier.

As indicated above, the yarns are preferably joined together by chemical bonding. The chemical bonding is accomplished in that the warp and weft yarns are impregnated with one or more binders, which are suitably selected from the group consisting of polyvinyl alcohol (PVA), polyvinyl acetate (PVAc), polyvinyl chloride (PVC), polyacrylates, acrylates, ethylene-vinylacetate copolymers (EVA), polyurethane (PUR), styrene butadiene copolymers (SB) and combinations thereof. Styrene butadiene copolymers are particularly preferred as a binder.

Preferably, the scrim is arranged (essentially) in parallel to the expanded polystyrene board. Preferably, the yarns of the scrim are arranged (essentially) in one plane. Preferably, the scrim is arranged (essentially) in parallel to the expanded polystyrene board and the yarns of the scrim are arranged (essentially) in one plane.

In one embodiment, the scrim is a single warp construction. In such construction, the first warp yarn (yarn in machine direction) under a weft yarn (yarn in cross direction) is followed by a warp yarn above the weft yarn. This pattern is repeated across the whole width. Typically, the spacing between the yarns is regular across the whole width of the scrim. At the intersections, two yarns will always meet each other.

In another embodiment, the scrim is a double warp construction. In such construction, upper and lower warp yarns will always be placed one upon the other so that the weft yarns will always be fixed between an upper and a lower warp yarn. At the intersections three yarns will always meet each other.

Preferably, the scrim has 0.4 to 5, more preferably 1 to 4.5, even more preferably 2 to 4, most preferably about 3 warp yarns per cm (in the machine direction).

Preferably, the scrim has 0.4 to 5, more preferably 1 to 4.5, even more preferably 2 to 4, most preferably about 3 weft yarns per cm (in the cross direction).

In a preferred embodiment, the scrim has 0.4 to 5, more preferably 1 to 4.5, even more preferably 2 to 4, most preferably about 3, warp yarns per cm in the machine direction and weft yarns per cm in the cross direction.

The interstices formed in the scrim between the warp yarns and weft yarns are preferably quadratic, rectangular, or asymmetrical, in particular quadratic.

Preferably, the scrim, when viewed from the space direction, in which the scrim has the lowest extension, has an amount of the total area which is covered by interstices which is at least 70%, more preferably at least 80% and even more preferably in the range of about 85 to 98%. In addition, or in alternative thereto, the scrim preferably has a weight per unit area of at least 15 g/m², more preferably of at least 20 g/m², even more preferably of at least 25 g/m², and of below 200 g/m² or 160 g/m². More preferably, the scrim has a weight per unit area of below 150 or 100 g/m². In some embodiments, the scrim has a weight per unit area of below 50 g/m². The weight per unit area of a scrim can be determined by measuring the mass of test piece of the scrim having a given area and dividing the measured mass by the area of the test piece. Preferably, the mass per unit area of the scrim is determined as defined in ISO 9073-18:2007 standard.

Preferably, the yarns of the scrim have a linear mass density of 11 to 272 tex, more preferably of about 68 tex.

Preferably, the yarns of the scrim have a tenacity of 55 to 60 cN/tex (determined according to DIN EN ISO 2062, 2010).

Preferably, the yarns of the scrim have an elongation at break of 2 to 5 % determined according to DIN 13934-2013).

Preferably, the scrim has a thickness between 0.10 and 1.0 mm, more preferably between 0.15 and 0.60 mm, even more preferably between 0.20 and 0.35 mm.

A particularly useful scrim for use in the invention is available as RG 3/3 68 PVAc or RG 3/3 68 SB from Kirson Industrial Reinforcements GmbH or from Saint-Gobain ADFORS Deutschland GmbH.

As indicated above, the scrim in one embodiment is embedded into the expanded polystyrene. In this embodiment, the expanded polystyrene regularly penetrates the scrim and thereby attaches the scrim to the expanded polystyrene by means of the penetrating expanded polystyrene. In other words, expanded polystyrene extends into interstices of the scrim and optionally through interstices across the scrim and attaches the scrim to the expanded polystyrene by mechanical and potentially chemical interaction. In again other words, expanded polystyrene is arranged in interstices of the scrim and optionally across interstices of the scrim thereby attaching the scrim to the expanded polystyrene. The attachment may be effected by mechanical and potentially chemical interaction. The scrim may be fully or partially embedded into expanded polystyrene. This has the effect that the scrim is (directly) attached to the expanded polystyrene. In other words, no layer is arranged between the scrim and the expanded polystyrene. This facilitates the manufacturing process and reduces complexity of the setup.

In this document, the term "to penetrate the scrim" may be understood as "to pass/extend through the interstices of the scrim" and/or "to fill the interstices of the scrim".

In another embodiment, the scrim is attached to the expanded polystyrene by means of a bonding material. In this embodiment, the expanded polystyrene board preferably comprises the bonding material on its surface. Preferably, the bonding material penetrates the scrim and the scrim is attached to the expanded polystyrene by means of the bonding material. In one embodiment, the bonding material forms one layer between the expanded polystyrene and the scrim, thereby attaching the scrim to the expanded polystyrene. In other words, the bonding material is arranged on the expanded polystyrene and within the interstices of the scrim and optionally on the scrim, thereby attaching the scrim to the expanded polystyrene. In one embodiment, the bonding material forms one discontinuous layer between the expanded polystyrene and within the interstices of the scrim, thereby attaching the scrim (essentially) directly to the expanded polystyrene.

Preferably, no layer and/or only the bonding material is arranged between the scrim and the expanded polystyrene. The term "only the bonding material is arranged between the scrim and the expanded polystyrene" means that at most one layer is arranged between the scrim and the expanded polystyrene. Preferably, the scrim is (essentially) directly attached to the expanded polystyrene. This facilitates the manufacturing process and reduces complexity of the setup, because the scrim can be adhered to the expanded polystyrene using only the bonding material or only one layer of bonding material. This is an advantage over e.g. mats or felts, which require at least two layers of adhesive on both sides thereof for attachment to for example an polystyrene insulation board and a roofing membrane. It is one advantage of the present invention that the bonding material can simply penetrate the scrim and is available on both sides of the scrim.

The bonding material is an adhesive composition and/or a coating composition. Thus, the bonding material has adhesive properties or is an adhesive. The bonding material may effect attachment of the scrim to the expanded polystyrene by adhesion, chemical bonding, mechanical bonding via penetration into pores of the expanded polystyrene and mixtures thereof.

The bonding material is preferably non-cementitious. Non-cementitious in this regard is intended to mean that the bonding agent does not contain a hydraulic binder, such as cement (e.g. Portland cement) as a functional ingredient, i.e. the cement content in the bonding agent should not exceed 5 wt.-% and preferably should be equal to or less than 1 wt.-%, based on the weight of the bonding agent. According to one embodiment, the bonding agent is essentially free of hydraulic binders. The term "hydraulic binder" refers to refers to substances, which react with water in a hydration reaction under formation of solid mineral hydrates or hydrate phases, which are not soluble in water or have a low water-solubility. Commonly used hydraulic binders include hydraulic cement and hydraulic lime.

According to one embodiment, the bonding material is applied as a liquid dispersion, which turns solid after curing. Preferably, the bonding material is applied by spray drying a dispersion of the bonding material onto the scrim and/or the expanded polystyrene. The dispersions are preferably aqueous. In one embodiment, the bonding material comprises acrylate and/or styrene-acrylate polymers. In one embodiment, 200 to 1000 g, preferably 300 to 800 g, more preferably 400 to 600 g, of the bonding material (dispersion) is used per m² of the surface of the expanded polystyrene.

In a preferred embodiment, the bonding material is not tacky to the touch to temperatures of up to 35°C, preferably up to 60°C, more preferably up to 90°C. This allows simplified transportation and storage of the expanded polystyrene board under typical conditions.

Whether the bonding material is "tacky to the touch" at a specific temperature can be easily determined by pressing the surface of the bonding material at the specific temperature with a finger. In doubtful cases (or at higher temperature), the "tackiness" can be determined by spreading powdered chalk on the surface of the bonding material at the specific temperature and subsequently tipping the surface so that the powdered chalk falls off. If the residual powdered chalk remains visibly adhering to the surface, the bonding material is considered tacky at the respective temperature.

In one embodiment, the bonding material has a loop tack adhesion to a glass plate measured at a temperature of 23°C of not more than 1.0 N/25 mm, preferably not more than 0.5 N/25 mm, more preferably not more than 0.1 N/25 mm, even more preferably 0 N/25 mm. The loop tack adhesion can be measured using a method as defined in BS EN 1719:1999 standard.

While this is not necessary, the bonding material may comprise one or more fillers selected from the group consisting of calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aluminum trihydroxide, magnesium hydroxide, and graphite. The degree of tackiness of the bonding material can be influenced by these fillers.

Preferably, the expanded polystyrene board has two major surfaces defining a thickness there between. Preferably, the expanded polystyrene board has a thickness of 5 to 60 cm, more preferably of 10 to 50 cm, even more preferably of 10 or 15 to 40 cm. Such thickness provides good insulating properties.

As indicated above, mats and felts, for example glass mats and glass felts, have been used in the state of the art for the construction of insulated roof systems. Such mats and felts differ from the scrim used in the present invention in the area, when viewed from the space direction, in which the mat or felt has the lowest extension, which is covered by interstices (which is less compared to a scrim), the orientation of the fibers (which is less ordered) and the extension of the fibers (which are shorter, regularly shorter than the length and width of the mat or felt).

A "mat" is in particular a non-woven material composed of randomly sized fibers, which are uniformly distributed and bonded together by binders to maintain the fibers in a mat form. The fibers can e.g. be bonded with a thermosetting resin such as urea formaldehyde or phenolic resole resins.

The term "felt" denotes a disordered and difficult to separate fibrous material. A felt can be provided as needle punched, i.e. its fibers do not have to be chemically adhered to each other.

Mats and felts regularly have an amount of the total area, which is covered by interstices, when viewed from the space direction, in which the mat or felt has the lowest extension, of equal to or less than 60%, preferably less than 35%. In addition, the interstices in mats and felts can be so small, that they can no longer be seen with the eye.

In the practice of the invention such mats and felts have been replaced by a scrim to provide the advantages as noted above. Thus, preferably, the inventive expanded polystyrene board does not comprise a mat and/or felt, in particular no glass mat and/or glass felt. Placing a glass mat is cumbersome. Moreover, a buildup comprising a glass mat is not feasible in the case of fully adhered roof systems. A glass felt excludes felt free setups. Further, handling a glass mat or glass felt is unpleasant and can irritate the skin.

The expanded polystyrene board may comprise layers, coatings, or other construction elements known to the person skilled in the art. Fire retardant material known to the person skilled in the art may be employed to improve the performance of the expanded polystyrene board.

In a second aspect, the invention relates to a roof system, comprising an expanded polystyrene board according to the invention and a roofing membrane. Preferably, the roofing membrane is attached to the expanded polystyrene board, preferably attached by means of an adhesive and/or mechanical fastening. In one embodiment, the roofing membrane is directly attached to the expanded polystyrene board. In other words, a roofing membrane may be attached to the scrim and/or i) to the penetrating expanded polystyrene or ii) to the bonding material of the expanded polystyrene board. The roofing membrane may be any type of conventional roofing membrane, such as a singly- or a multi-ply roofing membrane. Means of mechanical fastening include, for example, screws, nails etc. In case the roofing membrane is attached to the expanded polystyrene board by means of an adhesive, the roofing membrane may comprise a pre-applied layer of an adhesive (self-adhering membrane) or the adhesive may be applied to a surface of the expanded polystyrene board and/or to a surface of the roofing membrane during the installation of the roof system.

The inventors have surprisingly found that the roof system of the invention can fulfil the requirements of the BroofT1 classification. In other words, the roof system preferably fulfils the requirements of the BroofT1 classification. Whether the requirements for the BroofT1 classification are met, is determined according to DIN CEN/TS 1187 (March 2012).

Preferably, the roof system is an insulated roof system. The term "insulated" means that the roof system is insulated/insulating against heat and/or cold. In other words, "insulated" means "thermally insulated".

Roofing membranes are known to the person skilled in the art. A self-adhered (self-adhering) roofing membrane is equipped with a factory applied adhesive film and typically a release liner, which protects the adhesive film from fouling. The membrane can be rolled out and bonded directly to the substrate (the expanded polystyrene board) after the release liner has been removed. A self-adhering membrane is e.g. a composite sheet composed of an upper (e.g. waterproofing) layer and a lower (e.g. waterproofing) layer coated with a pressure sensitive adhesive. Such a self-adhering roofing membrane may be bonded directly to the structural deck or to an insulation board (e.g. the expanded polystyrene board) using the layer of a pressure sensitive adhesive. In a fully adhered roof system, the roofing membrane is adhered over its substantially entire surface to the surface of a substrate (the expanded polystyrene board) via an adhesive layer.

Particularly suitable roofing membranes to be used in a roof system of the present invention include, for example, PVC (polyvinylchloride), thermoplastic polyolefin (TPO, TPE-O), and elastomeric roofing membranes, such as ethylene propylene diene monomer rubber (EPDM) membranes. In addition to these materials, which regularly form the waterproofing layer of the membrane, the roofing membrane may comprise one or more structural elements selected from a polyester reinforcement layer, a (glass) mat, and a (glass) felt. In one embodiment, the roofing membrane is a single-ply membrane comprising one single waterproofing layer, wherein the single-ply membrane may further comprise a structural element such as a reinforcing mat and/or a felt. In another embodiment, the roofing membrane is a multi-ply membrane comprising at least two waterproofing layers and further comprising a reinforcing mat and/or a felt, in particular a glass mat and/or a glass felt. In a yet another embodiment, the roofing membrane does not comprise a mat and/or felt, in particular no glass mat and/or glass felt.

Preferably, the roofing membrane does not comprise constituents, which significantly reduce the flexibility of the membrane. Thus, preferably, the roofing membrane does not comprise a stiff scrim, in particular no glass scrim. A scrim in a roofing membrane may also lead to the occurrence of indentations on the membrane, which is at least an optical flaw. Avoiding a scrim allows a gain in installation speed and easiness and improved esthetics.

The roofing membrane and/or the expanded polystyrene board (and thus the roof system) may comprise layers, coatings, or other construction elements known to the person skilled in the art. Fire retardant materials known to the person skilled in the art may also be employed to improve the performance.

In a third aspect, the invention relates to a method for producing an expanded polystyrene board according to the invention, comprising
i) arranging expandable and/or pre-expanded polystyrene preforms on one side of a scrim or on both sides of a scrim and converting the expandable and/or pre-expanded polystyrene preforms into expanded polystyrene having the shape of a board, wherein the expanded polystyrene penetrates the scrim and wherein the scrim is attached to the expanded polystyrene, or
ii) arranging a scrim on one surface of expanded polystyrene, wherein the expanded polystyrene has the shape of a board, and applying a bonding material onto the scrim, wherein the bonding material penetrates the scrim and attaches the scrim to the expanded polystyrene, or
iii) applying a bonding material onto a scrim and/or onto one surface of expanded polystyrene, wherein the expanded polystyrene has the shape of a board and arranging the scrim on the surface of the expanded polystyrene, wherein the bonding material attaches the scrim to the expanded polystyrene.

A process according to the above mentioned i) may also be referred to as an "in-line process", whereas ii) and iii) may also be denoted as a "post-applied process". An advantage of the "post-applied process" is that the expanded polystyrene and the reinforcing scrim can be attached to each other in one single step; in the "in-line process" attachment is even possible during preparation of the board of expanded polystyrene. This is very efficient, because it is not necessary to apply several bonding material layers in the "post-applied process" respectively no reinforcement must be attached in a separate production step in the "in-line process".

The expandable and/or pre-expanded polystyrene preforms is a material that can be converted into expanded polystyrene. In one embodiment, the expandable and/or pre-expanded polystyrene preforms are (in the form of) beads. The expandable and/or pre-expanded polystyrene preforms may be converted into expanded polystyrene using pressure, temperature, reaction initiators, and/or irradiation. In a preferred embodiment of the "in-line process", the process comprises filling a press cavity of a press with expandable and/or pre-expanded polystyrene preforms and arranging the scrim in the press cavity of the press, and then converting the expandable and/or pre-expanded polystyrene preforms into the expanded polystyrene using the press.

In a preferred embodiment of the "post-applied process" (ii) and/or iii)), the process comprises applying the bonding material by spray drying a polymer dispersion onto the scrim and/or the surface of the expanded polystyrene. The polymer dispersion may comprise acrylate and/or styrene-acrylate polymers. In one embodiment, the "post-applied process" ii) comprises rolling the scrim out on the surface of the expanded polystyrene and applying the bonding material simultaneously. This is a particular advantage of a flexible scrim and facilitates manufacture.

In a fourth aspect, the invention relates to a method for producing a roof system according to the invention, comprising attaching a roofing membrane to an expanded polystyrene board according to the invention (and/or vice versa), preferably by means of an adhesive and/or mechanical fastening. The roofing membrane may be a self-adhering membrane or a non-self-adhering membrane. Preferably, the roof system is an insulated roof system.

Surprisingly, the inventors have found that the method can provide a roof system, which fulfils the requirements of the BroofT1 classification. In other words, preferably the (insulated) roof system fulfils the requirements of the BroofT1 classification. Particularly suitable roofing membranes for use in the fourth aspect are PVC (polyvinylchloride), thermoplastic polyolefin (TPO, TPE-O), and elastomeric membranes, such as ethylene propylene diene monomer rubber (EPDM) membranes. In addition to these materials, which regularly form the outer functional layer of the membrane, the roofing membrane comprises one or more structural elements selected from a polyester reinforcement layer, a (glass) mat, and a (glass) felt. In one embodiment, the roofing membrane is a single ply membrane comprising one single waterproofing layer, wherein the single ply membrane may comprise a structural element such as a mat and/or a felt. In another embodiment, the roofing membrane is a multi-ply membrane comprising at least two waterproofing layers and a mat and/or a felt, in particular a glass mat and/or a glass felt. In yet another embodiment, the roofing membrane does not comprise a mat and/or felt, in particular no glass mat and/or glass felt.

Preferably, the roofing membrane does not comprise constituents, which significantly reduce the flexibility of the membrane. Thus, preferably, the roofing membrane does not comprise a stiff scrim, in particular no glass scrim. A scrim in a roofing membrane may lead to the occurrence of indentations on the membrane, which is at least an optical flaw. Avoiding a scrim allows a gain in installation speed and easiness and improved esthetics. Thus, the method for producing a roof system according to the invention preferably does not comprise attaching a scrim or glass scrim to an expanded polystyrene board according to the invention (the expanded polystyrene board of the invention already comprises one scrim).

Other layers, coatings, or construction elements known to the person skilled in the art can be attached to the roofing membrane or to the expanded polystyrene board according to the invention.

In a fifth aspect, the invention relates to the use of an expanded polystyrene board according to the invention for the construction of a roof which meets the requirements of the BroofT1 classification.

In the above, the embodiments described in one aspect or different aspects may be combined in any manner, unless this is clearly not intended from the subject matter of the embodiments. In addition, preferred embodiments of the invention are also given in the dependent claims.

The invention, in particular the general setup of the expanded polystyrene board according to the invention and of a roof system according to the invention will be described with reference to Figures 1 to 4 as follows:
Fig. 1 shows a roof system 1 of one embodiment of the invention comprising an expanded polystyrene board 4 according to the invention and a roofing membrane 8 attached to the expanded polystyrene board 4. A back layer 5 of the roofing membrane 8 is attached to the expanded polystyrene board 4 by means of an adhesive (not shown). The roofing membrane 8 further comprises a glass mat 6 and a top layer 7.

The expanded polystyrene 2 has the shape of a board (is a board) with two major surfaces 10. The glass scrim 3 is arranged essentially on one (major) surface of the expanded polystyrene 2. The two major surfaces 10 are essentially parallel to each other and essentially planar. The proportion of thickness of the layers is not true to scale. In particular, the ratio of thickness of the expanded polystyrene 2 to the thickness of the other layers is far higher than shown in the Figures. The expanded polystyrene board 4 has a thickness T of 5 to 60 cm, preferably of 10 to 50 cm. The glass scrim 3 can, for example, be a glass scrim with 3 yarns per cm in the warp and weft direction, a thickness of about 0.30 mm and a weight of about 50 g/m². The warp and weft yarns can be bonded to each other with styrene butadiene copolymer (SB) binders.

Fig. 2 shows a roof system 1 of another embodiment of the invention. The roofing membrane 8 does not include a glass mat, but only a back layer 5 and a top layer 7. Instead of having a back layer 5 and a top layer 7, there might also only be one top layer. In other words, roofing membrane 8 may also be a singly-ply membrane comprising only one single waterproofing layer.

In Fig. 1 and 2, the roofing membrane 8 (respectively the back layer 5) is attached to the glass scrim 3 of the expanded polystyrene board 4. The glass scrim 3 has interstices (not shown). In Fig. 1 and 2, the glass scrim 3 is attached to the expanded polystyrene 2 by a bonding material (not shown). The bonding material fills the interstices of the glass scrim 3 and adhesively attaches the glass scrim 3 to the expanded polystyrene 2.

Fig. 3 shows a roof system 1 of another embodiment of the invention similar to that of Fig. 2. However, the bonding material does not only fill the interstices of the glass scrim 3 and adhesively attaches the glass scrim 3 to the expanded polystyrene 2, but also forms a bonding material layer 9 on top of the glass scrim 3.

In another embodiment of the invention, the expanded polystyrene 2 penetrates/fills the interstices of the glass scrim 3 and attaches the glass scrim 3 to the expanded polystyrene 2, which has the shape of a board (is a board). The expanded polystyrene may only fill the interstices of the glass scrim 3 (comparable with the bonding material in Fig. 1 and 2). In other embodiments, the expanded polystyrene may penetrate through the interstices of the glass scrim 3 and fully (comparable with the bonding material layer 9 in Fig. 3) or partially embed the glass scrim 3.

In Fig. 1 to 3, the glass scrim 3 is essentially arranged on one (major) surface 10 of the expanded polystyrene. This means that the majority of the weight and volume of expanded polystyrene 2 is arranged on one of the two sides of the glass scrim 3.

In an alternative embodiment, the glass scrim 3 is arranged essentially in the middle of the expanded polystyrene 2.

Fig. 4 shows such an embodiment. In this case, the glass scrim 3 may also be denoted as embedded into or within the expanded polystyrene 2.

In Fig. 1 to 4, the glass scrim 3 is directly attached to the expanded polystyrene 2. Some bonding material may have migrated and be arranged between the glass scrim 3 and the expanded polystyrene 2 in Fig. 1 to 3, but no further layer is arranged between the glass scrim 3 and the expanded polystyrene 2. This facilitates the manufacturing process and reduces complexity of the setup, because the glass scrim 3 can be adhered to the expanded polystyrene 2 using only one layer of bonding material, which penetrates through the scrim 3.

As the person skilled in the art will acknowledge, the roofing membrane or the expanded polystyrene board (and thus the roof system) may comprise further layers, coatings, or other construction elements than shown in these figures. The person skilled in the art also recognizes that further layers may be arranged to the other (major) surface 10 of the expanded polystyrene 2.

### Examples:

In the following experiments Kirson RG 3/3 68 SB was used as the scrim. Kirson RG 3/3 68 SB is a laid glass scrim with a thickness of about 0.30 mm and a weight of about 50 g/m², which has 3 warp and weft yarns per cm (in the machine direction and in the cross direction, respectively). The warp and weft yarns are bonded to each other with a styrene butadiene copolymer (SB) binder. The fibers of the scrim have a linear density of about 68 tex.

Sarnafil S-Therm Roof 100 mm boards (from Sika Schweiz AG) were used as expanded polystyrene for preparing the expanded polystyrene board of the invention in the "post-applied process". The boards are provided with a step seam running all around.

In the "post-applied process", the S-Therm Roof 100 mm board was covered with a 1 m x 1 m glass scrim and subsequently coated in a spray coating line with one of the two lacquers "Blau" (blue aqueous acrylate dispersion, aluminum trihydroxide filled) or "White" (white aqueous styrene-acrylate dispersion, chalk filled) as the bonding material with an area coating weight of about 500 g/m². All samples were dried for roughly three days at 50 °C in a climate chamber. The fibers of the scrim in the resulting expanded polystyrene board were thoroughly attached to the expanded polystyrene via the bonding material.

Expanded polystyrene boards according to an "in-line process" were prepared as follows: A 1.2 m x 1.2 m glass scrim was attached to one face of the board press prior to the production cycle. The press cavity of the board press was filled with beads of expandable and/or pre-expanded polystyrene preforms. The expandable and/or pre-expanded polystyrene preforms were converted into the expanded polystyrene having the shape of a board using the board press. In the process, expanded polystyrene penetrated the scrim, so that the fibers of the scrim in the resulting board were thoroughly attached to the expanded polystyrene.

Sarnafil TS 77-20 roofing membranes were then attached to the expanded polystyrene boards prepared according to the "post-applied" or "inline" processes.

Sarnafil TS 77-20 is a polyester reinforced, multi-layer, synthetic roof waterproofing sheet based on thermoplastic polyolefins (TPO) containing ultraviolet light stabilizers, flame retardant, and an inlay of glass fiber mat.

Various types of adhesive layers were used to adhere the Sarnafil TS 77-20 roofing membranes to the expanded polystyrene boards prepared as described above in order to provide fully adhered roof systems:
0.8 mm layer of two different butyl adhesives "Butyl 1" and "Butyl 2" from Sika Automotive Frankfurt-Worms GmbH,
1 mm layer of SikaLastomer-70 ("SL70") from Sika U.S.,
Sarnacol 2121, Sarnacol 2142S from Sika Schweiz AG, and
SikaMelt 9209HT from Sika Automotive Hamburg GmbH

Peel tests were performed with a peel angle of 90° according to DIN EN 1372:2015-06 standard initially and after five weeks storage at 70°C in order to test adhesion of the roofing membranes to the expanded polystyrene boards. All the tested roof systems showed sufficient adhesion in the test.

The produced test roof systems were further subjected to a fire testing in line with DIN CEN/TS 1187 (March 2012). After the test, the respective glass scrim was generally widely covered by residues. In all tested roof systems, the scrim supported the weight of the burning item, that was placed on the roof system, and the burning item did not break through down into the cavity left from the molten expanded polystyrene.

To simulate the edge of two adjacent scrims (with no overlap) or the contact line between two expanded polystyrene boards, the glass scrim was cut underneath the seam of the roofing membrane in the samples. Also, this roof system setup passed the test according to DIN CEN/TS 1187 (March 2012) without any issues. Finally, to simulate the worst case of three adjacent expanded polystyrene boards, the glass scrim of one expanded polystyrene board specimen was cut in T-shape and the burning item was placed right on top of the crossing. The cuts did not open up during the fire testing, and it seems that the glassy residues kept the edges of the glass scrim together. After breaking the scrim open, the T-shape became visible.

In summary, the roof systems of the invention passed the fire testing according to DIN CEN/TS 1187 (March 2012). Thus, the invention provides (insulated) expanded polystyrene boards and (insulated) roof systems comprising such (insulated) boards, which fulfil the requirements of BroofT1 classification.

The provided expanded polystyrene boards and roof systems according to the invention allow a gain in installation speed and easiness. Since the scrim is incorporated into the expanded polystyrene board, the roof systems can have a neater surface without indentations on the surface of the roofing membrane. In other words, the provided roof systems enable roofing systems based on expanded polystyrene to pass BroofT1 classification test without a glass scrim integrated into the roofing membrane.

### Reference sign list

- 1: roof system
- 2: expanded polystyrene
- 3: scrim
- 4: expanded polystyrene board
- 5: back layer
- 6: glass mat
- 7: top layer
- 8: roofing membrane
- 9: Bonding material layer
- 10: major surfaces of the expanded polystyrene

## Claims

1. An expanded polystyrene board (4) comprising expanded polystyrene (2) and a scrim (3),
- wherein the scrim (3) is attached to the expanded polystyrene (2),
- wherein the scrim (3) is arranged on one surface of the expanded polystyrene (2) or is embedded into the expanded polystyrene (2), and
- wherein the scrim (3) is composed of a non-flammable or hardly flammable material according to DIN 4102-1:1998.

2. An expanded polystyrene board (4) according to claim 1,
wherein the expanded polystyrene (2) penetrates the scrim (3) and the scrim (3) is attached to the expanded polystyrene (2) by means of the penetrating expanded polystyrene.

3. An expanded polystyrene board (4) according to claim 1,
wherein the scrim (3) is attached to the expanded polystyrene (2) by means of a bonding material, preferably by means of a non-cementitious bonding material.

4. An expanded polystyrene board (4) according to at least one of the preceding claims,
wherein the scrim (3) is a glass scrim.

5. An expanded polystyrene board (4) according to at least one of the preceding claims,
wherein the scrim (3) has 0.4 to 5, preferably 1 to 4.5, and more preferably 2 to 4, warp yarns per cm in the machine direction and/or 0.4 to 5, preferably 1 to 4.5, and more preferably 2 to 4, weft yarns per cm in the cross direction, most preferably wherein the scrim (3) has 2 to 4 warp yarns and weft yarns per cm.

6. An expanded polystyrene board (4) according to any one of claims 3 to 5,
wherein the bonding material is not tacky to the touch up to a temperature of 35 °C, preferably up to 60 °C, more preferably up to 90 °C.

7. An expanded polystyrene board (4) according to at least one of the preceding claims,
wherein the expanded polystyrene board (4) has a thickness of 5 to 60 cm, more preferably of 10 to 50 cm, even more preferably of 15 to 40 cm.

8. An expanded polystyrene board (4) according to at least one of the preceding claims,
wherein the scrim (3) is directly arranged on the expanded polystyrene (2) and/or only the bonding material is arranged between the scrim (3) and the expanded polystyrene (2).

9. An expanded polystyrene board (4) according to at least one of the preceding claims,
wherein the scrim (3) has a thickness between 0.10 and 1.0 mm, preferably between 0.15 and 0.60 mm, more preferably between 0.20 and 0.35 mm.

10. A roof system (1) comprising an expanded polystyrene board (4) according to at least one of claims 1 to 9 and a roofing membrane (8).

11. A roof system (1) according to claim 10,
wherein the roofing membrane (8) does not comprise a glass scrim.

12. A method for producing an expanded polystyrene board (4) according to at least one of claims 1 to 9, comprising
i) arranging expandable and/or pre-expanded polystyrene preforms on one side of a scrim (3) or on both sides of a scrim (3) and converting the expandable and/or pre-expanded polystyrene preforms into expanded polystyrene (2) having the shape of a board, wherein the expanded polystyrene (2) penetrates the scrim (3) and wherein the scrim (3) is attached to the expanded polystyrene (2), or
ii) arranging a scrim (3) on one surface of expanded polystyrene (2), wherein the expanded polystyrene (2) has the shape of a board, and applying a bonding material onto the scrim (3), wherein the bonding material penetrates the scrim (3) and attaches the scrim (3) to the expanded polystyrene (2), or
iii) applying a bonding material onto a scrim (3) and/or onto one surface of expanded polystyrene (2), wherein the expanded polystyrene (2) has the shape of a board, and arranging the scrim (3) on the surface of the expanded polystyrene (2), wherein the bonding material attaches the scrim (3) to the expanded polystyrene (2).

13. A method for producing a roof system (1) according to at least one of claims 10 to 11, comprising attaching a roofing membrane (8) to an expanded polystyrene board (4) according to at least one of claims 1 to 9, preferably by means of an adhesive and/or mechanical fastening.

14. A roof system (1) according to at least one of claims 10 to 11 or a method according to claim 13, wherein the roof system (1) fulfils the requirements of BroofT1 classification.

15. Use of an expanded polystyrene board (4) according to at least one of claims 1 to 9 for the construction of a roof which meets the requirements of the BroofT1 classification.
